# DEMANDE DE BREVET EUROPEEN

(11) **EP 1 295 785 A1**
(43) Date de publication de la demande: **26.03.2003**
(21) Numéro de dépôt: 01810914.0
(22) Date de dépôt: 20.09.2001
(51) Int. Cl.: B62M 23/02

(54) **Vehicule**

(71) Demandeur: Berner Fachhochschule Hochschule für Technic und Architektur Biel, 2501 Bienne (CH)
(72) Inventeur: Vezzini, Andrea, 3274 Merzligen (CH)
(74) Mandataire: Gresset, Jean

(57) **Abrégé**

Véhicule du type comportant des premier et deuxième moyens de propulsion, respectivement à source d'énergie musculaire (22) et électrique (28), dans lequel les moyens de propulsion à source d'énergie électrique comprennent :
■ un moteur (30) alimenté par la source d'énergie électrique,
■ une électronique associée (34) pour définir l'énergie devant être délivrée par la source d'énergie électrique (28) au moteur (30) en fonction de paramètres fixes et de paramètres variables,
■ des moyens d'actionnement reliés au dispositif de commande pour modifier les paramètres variables,
■ une mémoire (38) pour conserver les informations assurant le contrôle du dispositif de commande (36).

Afin d'améliorer les conditions d'utilisation, le moyens d'actionnement comportent au moins un capteur (52, 54, 56) agencé pour mesurer un paramètre relatif à l'environnement dudit véhicule.

## Description

La présente invention se rapporte aux véhicules destinés au transport d'une personne. Elle concerne plus particulièrement un véhicule du type comportant des premier et deuxième moyens de propulsion, respectivement à source d'énergie musculaire et électrique, dans lequel les moyens de propulsion à source d'énergie électrique comprennent :
■ un moteur alimenté par la source d'énergie électrique,
■ une électronique associée pour définir l'énergie devant être délivrée par la source d'énergie électrique au moteur en fonction de paramètres fixes et de paramètres variables,
■ des moyens d'actionnement reliés au dispositif de commande pour modifier les paramètres variables,
■ une mémoire pour conserver les informations assurant le contrôle du dispositif de commande.

Un tel véhicule est, par exemple, décrit dans le document FR 2 413 254. Il comporte des moyens de régulation de la vitesse, la source d'énergie électrique alimentant le moteur lorsque la vitesse est faible ou le moteur travaillant comme génératrice lorsque la vitesse limite est dépassée. Un tel véhicule doit donc être muni d'un capteur permettant de mesurer sa vitesse.

De son côté, le document FR 2 778 162 décrit un véhicule muni d'une manette permettant de choisir quel paramètre est pris en compte par le dispositif de commande pour définir la quantité d'énergie délivrée au moteur par la source d'énergie pour alimenter le moteur. Parmi ces paramètres, on relèvera la vitesse et le couple appliquer par l'utilisateur. A cet effet, ce véhicule est équipé d'un capteur de mesure du couple moteur appliqué par l'utilisateur et d'un capteur de vitesse.

Il est donc bien connu de munir de capteurs un véhicule tel que défini ci-dessus, pour connaître des paramètres relatifs à son fonctionnement, en vue notamment d'ajuster les conditions d'alimentation de son moteur. Or, la pratique montre que d'autres paramètres sont susceptibles d'affecter l'usage optimum d'un tel véhicule. Le but de la présente invention est de permettre la prise en compte de ces paramètres. A cet effet, les moyens d'actionnement comportent au moins un capteur agencé pour mesurer un paramètre relatif à l'environnement du véhicule.

De la sorte, il est possible de faire intervenir, dans la distribution d'énergie, une partie au moins de paramètres extérieurs au véhicule qui rendent le déplacement plus ou moins difficile.

Selon l'importance du déplacement à effectuer, il se peut que l'énergie disponible ait été dispensée abondamment en début de parcours. La fin du déplacement peut alors s'avérer particulièrement pénible. Pour éviter une telle situation, l'électronique associée comporte un microprocesseur, et les moyens d'actionnement sont munis d'une borne permettant le branchement d'un programmeur agencé pour permettre l'introduction de données dans la mémoire, en vue d'être traitées par le microprocesseur. Il est, de la sorte possible d'entrer des données relatives au déplacement à effectuer, de telle sorte que le microprocesseur peut les prendre en compte au cours du déplacement. Le terme de « borne » est à prendre ici au sens large, c'est-à-dire un organe permettant de relier l'un à l'autre deux dispositifs électriques. Il peut s'agir d'une liaison par contact, mais aussi au moyen d'une antenne, par exemple.

Lors de déplacements, seul ou en groupes, il arrive qu'un utilisateur doive faire un effort dépassant ses ressources. Il en résulte que son rythme cardiaque est supérieure aux valeurs raisonnables. Afin d'éviter une telle situation, le véhicule selon l'invention comporte un capteur agencé pour déterminer un paramètre relatif au comportement physiologique de l'utilisateur, et plus particulièrement un pulsomètre. De manière avantageuse, les moyens d'actionnement comportent, dans la mémoire, une information relative au rythme cardiaque maximal admissible. Dans le cas où ce rythme serait dépassé et que la réserve de la source d'énergie est insuffisante pour fournir plus d'énergie, le microprocesseur peut alors enclencher un frein électrique et une alarme incitant l'utilisateur à s'arrêter.

Les paramètres relatifs à l'espace physique dans lequel le véhicule se meut jouent également un rôle important dans les conditions de déplacement. Afin de pouvoir en tenir compte, les moyens d'actionnement comportent un capteur du type permettant de mesurer un paramètre relatif à l'espace physique entourant le véhicule.

Ainsi, le paramètre mesuré peut être la pression atmosphérique, et le capteur un altimètre. Le capteur peut aussi être un anémomètre ou encore un thermomètre agencé pour mesurer la température ambiante. Il est aussi avantageusement possible de faire appel à un capteur de type GPS, permettant ainsi de connaître la position du véhicule au cours de ses déplacements.

D'autres avantages et caractéristiques de l'invention ressortiront de la description qui va suivre, faite en regard du dessin annexé, dans lequel:

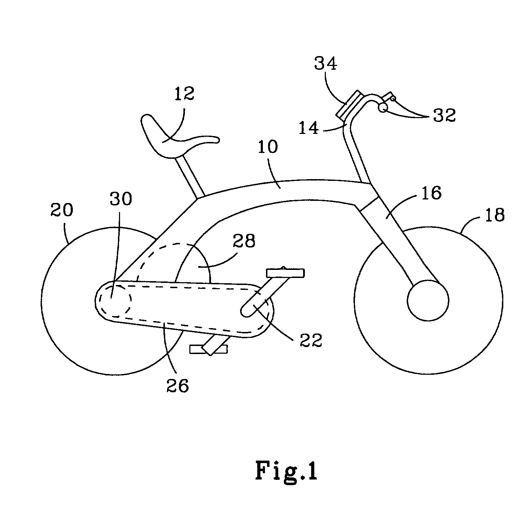

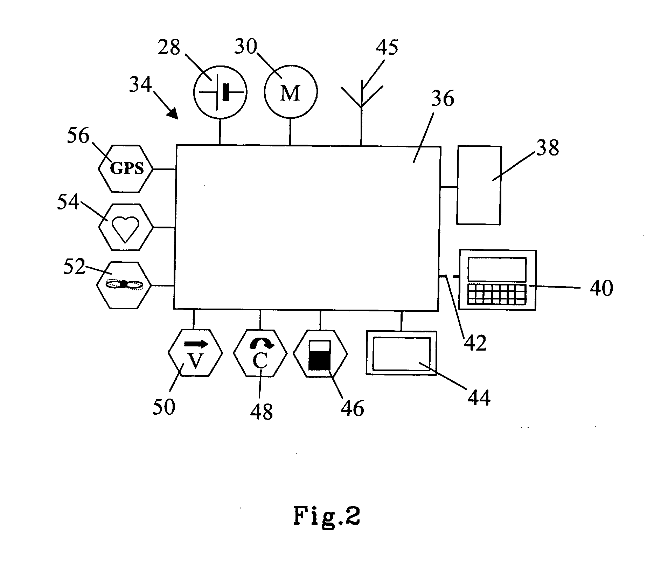

La figure 1 montre un véhicule selon l'invention, et la figure 2 un schéma de principe de la commande de ce véhicule.

Le véhicule de la figure 1, en l'occurrence une bicyclette, comporte un cadre 10 formant bâti, lequel porte, pour assurer la mobilité du véhicule :
■ une selle 12 destinée à servir d'appui à l'utilisateur,
■ un guidon 14 et une fourche 16, solidaires l'un de l'autre et montés pivotant sur le cadre 10, et une roue avant 18 montée mobile en rotation sur la fourche 16,
■ une roue arrière 20,
■ un pédalier 22,
■ une chaîne 26 reliant le pédalier 22 à la roue arrière 20,
■ une batterie d'accumulateurs schématiquement représentée en 28 et
■ un moteur 30 disposé dans la roue arrière 20, du type pouvant aussi travailler comme génératrice.

Ce véhicule est, en outre muni de moyens de commande et plus particulièrement de manettes 32 solidaires du guidon 14, ainsi que d'une électronique schématiquement représentée en 34, et qui sera décrite de manière plus détaillée en référence à la figure 2.

Les composants mécaniques de cette bicyclette, y compris le moteur, sont bien connus de l'homme du métier. Ils ne seront donc pas décrits de manière plus détaillée. La batterie 28 est avantageusement de type lithium-polymère, qui permet de stocker jusqu'à 200 Wh/kg.

Ce véhicule peut donc être utiliser comme une bicyclette avec, toutefois, la possibilité de trouver un appoint d'énergie dans la batterie 28, lequel est délivré par l'intermédiaire du moteur 30. Pour assurer une utilisation optimale de cette énergie, l'utilisateur peut faire appel aux moyens de commande représentés sur la figure 2.

Sur cette figure, on retrouve la batterie 28 et le moteur 30, ainsi que l'électronique associée 34, qui comporte, de manière plus détaillée :
■ un dispositif de commande 36, pour définir l'énergie devant être délivrée par la source d'énergie électrique au moteur en fonction de paramètres fixes et de paramètres variables, en l'occurrence un microprocesseur,
■ une mémoire 38 pour conserver les informations assurant le contrôle du dispositif de commande, et
■ des moyens d'actionnement reliés au dispositif de commande pour modifier les paramètres variables disposés à la périphérie du rectangle représentant le dispositif de commande 36.

De manière plus précise, les moyens d'actionnement comprennent :
■ des moyens de communication permettant à l'utilisateur de connaître et de modifier les informations stockées dans la mémoire 38, comportant:
   ■ un ordinateur 40, relié de manière amovible au dispositif de commande par l'intermédiaire d'une borne 42,
   ■ un écran 44 LCD, avantageusement de type tactile pour permettre la sélection de fonctions ou de paramètres et l'affichage d'informations relatives, notamment au fonctionnement du véhicule, et
   ■ une antenne 45 permettant de recevoir des informations de l'extérieur, par exemple d'un autre ordinateur,
■ des capteurs destinés à connaître les paramètres qualifiant le fonctionnement du véhicule, soit :
   ■ un capteur 46 pour la détermination de la charge encore disponible dans la batterie 28,
   ■ un capteur de couple 48, destiné à mesurer le couple appliqué par l'utilisateur sur le pédalier 22,
   ■ un détecteur de vitesse du véhicule 50, mesurant la vitesse de rotation des roues ou du moteur, et
■ des capteurs destinés à mesurer des paramètres relatifs à l'environnement du véhicule, et plus particulièrement :
   ■ un anémomètre 52 pour mesurer la vitesse du vent,
   ■ un pulsomètre 54 permettant de contrôler le rythme cardiaque de l'utilisateur, et
   ■ un capteur GPS 56.

Cette liste de capteurs n'est pas exhaustive. Il serait ainsi possible d'y ajouter un thermomètre permettant de mesurer la température ambiante, un altimètre, etc.

Le capteur GPS 56 peut être du type vendu par la maison Garmin (USA). La maison Polar commercialise des pulsomètres du type de ceux utilisés sur ce véhicule. Enfin, des autres capteurs destinés à mesurer la température, la pression ou la vitesse du vent, se trouvent au catalogue de la maison Infineon (DE).

Pour bien comprendre les principes de fonctionnement du véhicule selon l'invention, il faut savoir qu'il est généralement conduit par un nombre limité de personnes. Dans l'exemple qui suit, le principe de fonctionnement sera décrit en référence à un utilisateur. Le même principe est applicable avec plusieurs d'entre eux, les données relatives à chacun d'eux étant stockées séparément dans la mémoire.

La bicyclette est un véhicule très polyvalent. Elle est utilisée tant comme moyen de transport citadin, comme accessoire de promenade, que pour la pratique d'un sport. Dans chacune de ces applications l'utilisateur a des exigences spécifiques.

Dans les déplacements en ville, il est important de pouvoir démarrer rapidement, même à la montée, afin d'avoir une vitesse voisine de celle des autres véhicules participant au trafic. Il est, par ailleurs, souhaitable que l'usager n'arrive pas à son travail en sueur, car il est fréquemment difficile de changer de vêtements et à plus forte raison de prendre une douche. Dans ce cas donc, la présence d'une source d'énergie électrique aura pour but d'améliorer la sécurité et le confort.

La pratique de la randonnée à bicyclette peut présenter plus d'agrément lorsque celle-ci est munie d'une source d'énergie électrique d'appoint, du moins tant que cette source d'énergie n'est pas épuisée, auquel cas, l'utilisateur doit fournir, en fin de parcours, un effort d'autant plus grand que le véhicule est plus lourd qu'une bicyclette normale.

En pratiquant un sport, l'athlète souhaite connaître ses limites et ses performances. La source d'énergie électrique permet alors d'assurer un suivi particulièrement fin des performances réalisées, mais encore d'assurer des temps de pause dans l'effort, sans pour autant devoir arrêter le peloton avec lequel on se déplace. Par ailleurs, un entraînement efficace nécessite un dosage de l'effort qui n'est pas nécessairement compatible avec la configuration du terrain ou les conditions météorologiques. Dans cette application, il est souhaitable d'adapter l'énergie fournie en fonction de la fatigue, qui peut, au moins partiellement, être évaluée sur la base du rythme cardiaque.

On constate que, pour chacune de ces applications, les critères à considérer sont différents, ils ne peuvent toutefois être pris en considération qu'en faisant appel à un capteur agencé pour mesurer un paramètre relatif à l'environnement du véhicule.

Lorsque la bicyclette est utilisée en ville, l'usager peut introduire dans la mémoire 38, au moyen de l'ordinateur 40, des informations sur le parcours qu'il aura à pratiquer, avec indication de la dénivellation et de la distance à parcourir, ou encore l'indication directe du lieu où il se rend, au moyen d'un programme faisant appel à la détermination de la position par GPS.

Sur cette base, le dispositif de commande 36 dosera l'énergie d'appoint de manière à éviter que la batterie 28 ne soit vide avant d'arriver au but fixé. Lorsqu'un tel parcours est régulièrement suivi, l'ordinateur peut prendre en compte les habitudes de l'utilisateur, et les comportements, en fonction notamment de l'environnement. Par exemple, lorsque la température ambiante est relativement élevée, l'utilisateur aura tendance à partir plus rapidement lorsqu'il quitte un feu rouge, alors qu'il peinera à la montée, d'autant qu'il souhaite éviter de transpirer. Le dispositif de commande 36 dispensera alors son énergie plutôt à la montée qu'au démarrage.

En disposant d'un anémomètre, il est possible de tenir également compte de la vitesse du vent. Cela est particulièrement vrai lorsque le parcours est régulièrement emprunté. Il est alors possible au dispositif de commande 36 de comparer les vitesses atteintes et les quantités d'énergie délivrées, puis d'extrapoler entre ces différentes situations pour définir un mode de fonctionnement adapté aux conditions rencontrées.

Pour permettre de telles prestations, il est, bien sûr, nécessaire que le dispositif de commande dispose des informations lui permettant l'ajustement de la commande aux circonstances. A cet effet, l'utilisateur doit introduire des informations le concernant et relatives à la manière dont il entend utiliser son véhicule. Ces informations sont de trois ordres :
- Données personnelles relatives à l'utilisateur,
- Type d'utilisation, et
- Données concernant le parcours envisagé.

Les données personnelles ne sont entrées qu'une fois. Elles permettent de choisir des paramètres de base destinés, ensuite, à évoluer en fonction des paramètres mesurés lors des déplacements effectués. Ces données personnelles concernent essentiellement :
- L'âge (PA);
- Le poids (PP);
- La grandeur (PG);
- Le niveau d'entraînement physique (PE), qui peut être "Sportif confirmé" (PE = Sc), "Sportif amateur" (PE = Sa) ou "Sportif dilettante" (PE = Sd); et, pour une utilisation sportive,
- Le rythme cardiaque normal (PCN) et le rythme cardiaque limite (PCL).

Le type d'usage est proposé sur l'écran. Il suffit donc de choisir celui correspondant au besoin immédiat. Il est également proposé d'introduire un nouveau parcours. Si ces informations ne sont pas modifiées, ce sont les dernières utilisées qui sont appliquées par défaut.

La circulation citadine se réfère à deux principes de base, permettant une sécurité optimale, soit:
- tendre vers une vitesse constante voisine de celle de la circulation environnante, par exemple de 30 km/h,
- démarrer le plus rapidement possible.

Pour garantir cette sécurité optimale, il est nécessaire de tenir compte de l'énergie disponible. A cet effet, et dans la mesure où le parcours n'est pas enregistré, l'utilisateur donne l'adresse du lieu où il se rend au moyen du programme d'itinéraires associé au système GPS. Ce dernier évalue la distance à parcourir L, la dénivellation h et le nombre de démarrages probables D.

Connaissant le poids PP de l'utilisateur, il est possible de déterminer l'énergie ED à fournir à chaque démarrage, à partir de l'énergie cinétique, définie par la somme des masses du véhicule et de l'utilisateur et par le carré de la vitesse. L'énergie nécessaire pour assurer la dénivellation programmée EH peut être calculée à partir de l'énergie potentielle définie par les poids du véhicule et de l'utilisateur, et de la dénivellation. L'énergie nécessaire pour effectuer la distance programmée EL est fonction de la distance parcourue et des performances du véhicule. Il s'agit donc d'un paramètre initialement programmé, qui est ajusté au cours du temps, en fonction des informations recueillies.

Si le total ED + EH + EL est inférieur à l'énergie EB de la batterie d'accumulateurs 28, alors le dispositif de commande 36 dispense toute l'énergie nécessaire pour permettre un déplacement dans les conditions optimales. Si tel n'est pas le cas, il donnera à l'utilisateur, par l'écran 44, des indications sur l'appui que le véhicule peut lui apporter. Ce dernier peut donc ainsi doser son effort de manière à ce qu'il arrive au but dans les meilleures conditions possibles.

Au cours du déplacement, le dispositif de commande 36 suit l'évolution de la consommation en fonction de la distance parcourue, à partir des informations reçues du capteur GPS 56 ou d'un altimètre et d'un compteur de distance, et de la charge encore disponible dans la batterie d'accumulateurs 28. Lorsque la consommation est supérieure à celle évaluée, le dispositif 36 donne un avertissement à l'utilisateur par le biais de l'écran 44.

A la fin du parcours, le dispositif de commande 36 enregistre, dans la mémoire 38, les paramètres relatifs à ce déplacement et les conditions météorologiques, plus particulièrement la température et la vitesse du vent. Ces informations peuvent, ensuite, être utilisées comme paramètres pour une évaluation plus fine des conditions dans lesquelles la source d'énergie électrique peut apporter une aide à l'utilisateur, en prenant en compte ses habitudes, par exemple de fournir un effort plus grand en début ou en fin de parcours, la manière dont il fait usage de la fonction de freinage par génératrice que peut assurer le moteur, etc.

En mode randonnée, la vitesse de déplacement peut être réduite. Le démarrage pose aussi moins de difficultés. Par contre, le parcours est généralement plus long. L'utilisateur souhaite généralement le vivre de manière tranquille. Le véhicule fournira donc une énergie d'appoint chaque fois que le couple dispensé par l'utilisateur est important en regard de la vitesse du véhicule. Cela peut être dû à une montée ou à un fort vent contraire. Dans ce cas aussi, il est avantageux que la source d'énergie ne soit pas épuisée avant la fin du déplacement.

En mode sportif, d'autres paramètres peuvent encore être pris en compte, et plus spécialement le rythme cardiaque. Il est également possible de proposer un programme dans lequel des montées sont simulées de manière programmée, bien que l'entraînement se déroule en plaine, en jouant sur la fonction génératrice. En d'autres termes, il est possible de gérer un programme d'entraînement en adaptant l'effort à fournir en fonction du temps, quel que soit le parcours effectué. Ce programme peut être préétabli et évolutif, de manière à prendre en compte les objectifs de l'entraînement. Il peut aussi prendre en compte la température ambiante et la vitesse du vent par exemple. De manière avantageuse et pour des raisons de sécurité, ce mode ne pourra être appliqué que si le pulsomètre est branché.

Le véhicule tel qu'il vient d'être décrit permet donc à un utilisateur d'effectuer des déplacements dans des conditions particulièrement favorables, en prenant en compte des paramètres extérieurs au véhicule qui influencent le bon déroulement du déplacement effectué.

## Revendications

1. Véhicule du type comportant des premier et deuxième moyens de propulsion, respectivement à source d'énergie musculaire (22) et électrique (28), dans lequel les moyens de propulsion à source d'énergie électrique comprennent :
■ un moteur (30) alimenté par la source d'énergie électrique,
■ une électronique associée (34) pour définir l'énergie devant être délivrée par la source d'énergie électrique (28) au moteur (30) en fonction de paramètres fixes et de paramètres variables,
■ des moyens d'actionnement reliés au dispositif de commande pour modifier les paramètres variables,
■ une mémoire (38) pour conserver les informations assurant le contrôle du dispositif de commande (36),
**caractérisé en ce que** lesdits moyens d'actionnement comportent au moins un capteur (52, 54, 56) agencé pour mesurer un paramètre relatif à l'environnement dudit véhicule.

2. Véhicule selon la revendication 1, **caractérisé en ce que** l'électronique associée comporte un microprocesseur (36) et **en ce que** les moyens d'actionnement sont munis d'une borne (42) permettant le branchement de moyens de programmation (40) agencés pour permettre l'introduction de données dans ladite mémoire (38), en vue d'être traitées par ledit microprocesseur (36).

3. Véhicule selon l'une des revendications 1 et 2, **caractérisé en ce que** ledit capteur est agencé pour déterminer un paramètre relatif au comportement physiologique de l'utilisateur.

4. Véhicule selon la revendication 3, **caractérisé en ce que** ledit capteur est un pulsomètre (52).

5. Véhicule selon l'une des revendications 1 à 4, **caractérisé en ce que** ledit capteur est du type permettant de mesurer un paramètre relatif à l'espace physique entourant ledit véhicule.

6. Véhicule selon la revendication 5, **caractérisé en ce que** ledit paramètre est une pression atmosphérique et lesdits moyens d'actionnement comportent un capteur de type altimètre.

7. Véhicule selon l'une des revendications 5 et 6, **caractérisé en ce que** lesdits moyens d'actionnement comporte un capteur de type anémomètre (52).

8. Véhicule selon l'une des revendications 5 à 7, **caractérisé en ce que** lesdits moyens d'actionnement comporte un capteur de type thermomètre, agencé pour mesurer la température ambiante.

9. Véhicule selon l'une des revendications 5 à 8, **caractérisé en ce que** lesdits moyens d'actionnement comporte un capteur de type GPS (56).
